# EUROPEAN PATENT APPLICATION

(11) **EP 2 429 238 A1**
(43) Date of publication of application: **14.03.2012**
(21) Application number: 09848600.4
(22) Date of filing: 24.08.2009
(51) Int. Cl.: H04W 36/00

(54) **CHANNEL SWITCHING METHOD, DEVICE AND SYSTEM**

(71) Applicant: Huawei Technologies Co., Ltd., Guangdong 518129 (CN)
(72) Inventor: LIU, Xiangping, Shenzhen Guangdong 518129 (CN); XIANG, Haizhou, Shenzhen Guangdong 518129 (CN); WU, Xingfen, Shenzhen Guangdong 518129 (CN)
(74) Representative: Pfenning, Meinig & Partner GbR
(86) International application number: PCT/CN2009/073448
(87) International publication number: WO 2011/022868

(57) **Abstract**

A channel change method, device, and system are provided. One channel change method includes: in a channel change process, reassembling Program Specific Information for decoding media data into a Real-time Transport Protocol packet, in which a stream feature of the Real-time Transport Protocol packet is the same as a stream feature of a Real-time Transport Protocol packet carrying the media data; sending the Real-time Transport Protocol packet carrying the Program Specific Information to a terminal apparatus, and subsequently, sending the Real-time Transport Protocol packet carrying the media data to the terminal apparatus. The technical solution may ensure that the Real-time Transport Protocol packet carrying the Program Specific Information reaches the terminal apparatus earlier than the Real-time Transport Protocol packet carrying the media data does, so as to prevent the phenomenon of picture blurs or a black screen from occurring on the terminal apparatus and avoid influences of the Program Specific Information on the time delay of the channel change.

## Description

### FIELD OF THE INVENTION

The present invention relates to the field of communications technologies, and in particular, to a channel change technology.

### BACKGROUND OF THE INVENTION

In a channel change process, upon receiving a channel change response sent by a network side (for example, a server) for a channel change request, a terminal apparatus is required to decode media data pushed from the network side by using Program Specific Information (PSI) pushed from the network side to implement channel change.

A channel change method is as follows. PSI periodically appears in a media data stream. The period is generally 500 milliseconds (ms). A channel change server does not perform processing operations such as identification on the PSI in a received media data stream. In a change process, the channel change server pushes identified key frame to a terminal apparatus. The terminal apparatus receives the key frame and identifies the PSI from the received media data stream. Subsequently, the terminal apparatus decodes the key frame by using the identified PSI to implement channel change. Based on different encoding methods, the key frame may be an Independent Decoding Refresh (IDR) frame or an Intra (I) frame.

In the channel change method, a distance between the PSI and a first Transport Stream (TS) packet in a key frame affects a time delay of the channel change. If the distance is large, the time delay of the channel change is also large.

To reduce the time delay of the channel change, the channel change server may extract the PSI from the received media data stream and sends the PSI through the Real-time Transport Control Protocol (RTCP) before sending the key frame to the terminal apparatus. However, in a process of implementing the present invention, the inventors find that the RTCP and the key frame have different transmission time delays in a network. Therefore, the PSI and the media data reach the terminal apparatus at different time. The PSI may reach the terminal apparatus later than the media data does. In this case, the terminal apparatus might discard the PSI that is late, so the terminal apparatus fails to decode the received media data causing phenomena such as picture blurs or freezes or a black screen. In addition, even if the terminal apparatus does not discard the late PSI, the time delay of the channel change is affected as the terminal apparatus waits for the PSI.

### SUMMARY OF THE INVENTION

Embodiments of the present invention provide a channel change method, device, and system, so as to ensure that Program Specific Information reaches a terminal apparatus earlier than media data does, thereby avoiding phenomena such as picture blurs or freezes or a black screen as the terminal apparatus fails to decode the media data. Also, the influences of the Program Specific Information on the time delay of the channel change are prevented.

An embodiment of the present invention provides a channel change method, which includes:
in a channel change process, reassembling Program Specific Information for decoding media data into a Real-time Transport Protocol packet, in which a stream feature of the Real-time Transport Protocol packet is the same as a stream feature of a Real-time Transport Protocol packet carrying the media data;
sending the Real-time Transport Protocol packet carrying the Program Specific Information to a terminal apparatus; and
sending the Real-time Transport Protocol packet carrying the media data to the terminal apparatus.

An embodiment of the present invention provides a channel change device, which includes:
a first change processing module, configured to, in a channel change process, reassemble Program Specific Information for decoding a media data stream into a Real-time Transport Protocol packet, in which a stream feature of the Real-time Transport Protocol packet is the same as a stream feature of a Real-time Transport Protocol packet carrying the media data; and
a first sending module, configured to send the Real-time Transport Protocol packet carrying the Program Specific Information to a terminal apparatus, and send the Real-time Transport Protocol packet carrying the media data to the terminal apparatus.

An embodiment of the present invention provides a channel change system, which includes:
a server, configured to, in a channel change process, reassemble Program Specific Information for decoding a media data stream into a Real-time Transport Protocol packet, in which a stream feature of the Real-time Transport Protocol packet is the same as a stream feature of a Real-time Transport Protocol packet carrying the media data, and the server sends the Real-time Transport Protocol packet carrying the Program Specific Information and sends the Real-time Transport Protocol packet carrying the media data; and
a terminal apparatus, configured to acquire Program Specific Information from the received Real-time Transport Protocol packet, and decode the media data carried in the received Real-time Transport Protocol packet by using the Program Specific Information.

An embodiment of the present invention provides another channel change method, which includes:
acquiring a Transport Stream packet including Program Specific Information from a received channel multicast media stream and storing the Transport Stream packet including the Program Specific Information, in which the Program Specific Information is used for decoding media data;
in a channel change process, acquiring the Transport Stream packet including the Program Specific Information from the stored information, and reassembling the Transport Stream packet including the Program Specific Information into a Real-time Transport Protocol packet;
sending the Real-time Transport Protocol packet carrying the Program Specific Information to a terminal apparatus; and
sending a Real-time Transport Protocol packet carrying the media data to the terminal apparatus.

An embodiment of the present invention provides a channel change device, which includes:
a Transport Stream packet acquisition module, configured to acquire a Transport Stream packet including Program Specific Information from a received channel multicast media stream, and store the Transport Stream packet including the Program Specific Information, in which the Program Specific Information is used for decoding media data;
a second change processing module, configured to, in a channel change process, acquire a Transport Stream packet including Program Specific Information from information stored by the Transport Stream packet acquisition module, and reassemble the Transport Stream packet including the Program Specific Information into a Real-time Transport Protocol packet; and
a second sending module, configured to send the Real-time Transport Protocol packet carrying the Program Specific Information to a terminal apparatus, and subsequently, a Real-time Transport Protocol packet carrying the media data is sent to the terminal apparatus.

An embodiment of the present invention provides another channel change system, which includes:
a server, configured to acquire a Transport Stream packet including Program Specific Information from a received channel multicast media stream, store the Transport Stream packet including the Program Specific Information, in which the Program Specific Information is used for decoding media data; and in a channel change process, acquire the Transport Stream packet including the Program Specific Information from the stored information, and reassemble the Transport Stream packet including the Program Specific Information into a Real-time Transport Protocol packet; and
a terminal apparatus, configured to acquire Program Specific Information from the received Real-time Transport Protocol packet, and decode the media data carried in a received Real-time Transport Protocol packet by using the Program Specific Information.

As can be seen from the description of the technical solutions, Program Specific Information is reassembled into a Real-time Transport Protocol packet and it is ensured that a stream feature of the Real-time Transport Protocol packet is the same as a stream feature of a Real-time Transport Protocol packet carrying media data. In this manner, the Real-time Transport Protocol packet carrying the Program Specific Information is sent to a terminal apparatus and subsequently a Real-time Transport Protocol packet carrying the media data is sent to the terminal apparatus, so the Program Specific Information may reach the terminal apparatus earlier than the media data does, so as to avoid a phenomenon that the terminal apparatus fails to normally decode the received media data, and meanwhile also avoid a phenomenon that time delay occurs on channel change for waiting for Program Specific Information used to decode media data. Furthermore, the technical solution may further avoid a phenomenon that picture blurs or freezes or a black screen occurs during channel change and the influences of the Program Specific Information on the time delay of the channel change may be reduced.

### BRIEF DESCRIPTION OF THE DRAWINGS

FIG 1 is a flow chart of a channel change method according to Embodiment 1 of the present invention;

FIG. 2 is a flow chart of a channel change method according to Embodiment 2 of the present invention;

FIG. 3 is a flow chart of a channel change method according to Embodiment 3 of the present invention;

FIG 4 is a schematic diagram of a channel change device according to Embodiment 4 of the present invention;

FIG 5 is a schematic diagram of a channel change system according to Embodiment 5 of the present invention;

FIG 6 is a flow chart of channel change method according to Embodiment 6 of the present invention;

FIG 7 is a schematic diagram of a channel change device according to Embodiment 7 of the present invention; and

FIG. 8 is a schematic diagram of a channel change system according to Embodiment 8 of the present invention.

### DETAILED DESCRIPTION OF THE EMBODIMENTS

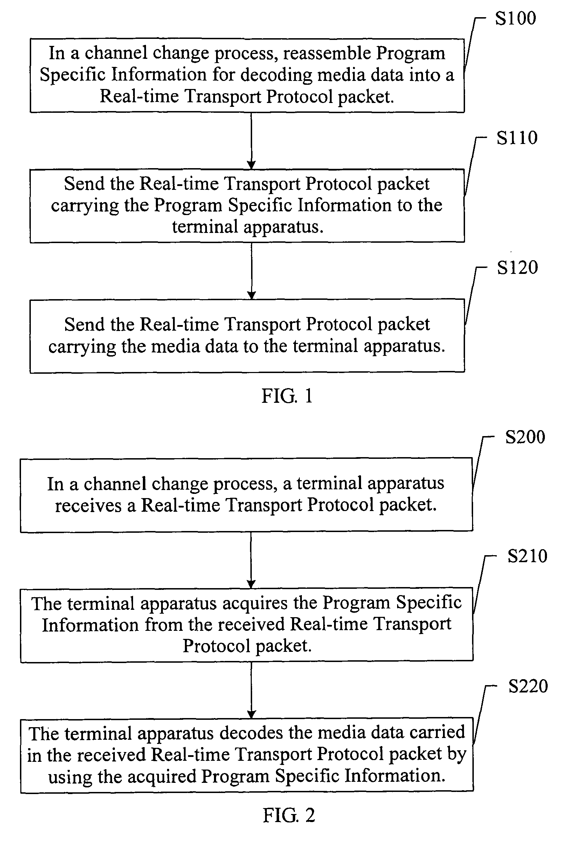

The process of a channel change method in Embodiment 1 is shown in FIG. 1.

In FIG 1, S100: In a channel change process, reassemble Program Specific Information for decoding media data into a Real-time Transport Protocol packet. A stream feature of the Real-time Transport Protocol packet is the same as a stream feature of an Real-time Transport Protocol packet carrying the media data. That is to say, the Program Specific Information and the media data decoded by using the Program Specific Information are transported through Transport Streams having the same stream feature and the Transport Stream of the Program Specific Information and Transport Stream of the media data are both Real-time Transport Protocol based Transport Streams. The media data may be media data of a target program of channel change.

For example, after a channel change request sent by a terminal apparatus is received, a target program of channel change may be first determined according to the channel change request. Next, it is judged whether the target program of the channel change exists. If the target program exists, Program Specific Information of the target program is acquired from a buffer the acquired Program Specific Information is reassembled into a Real-time Transport Protocol packet by using a stream feature corresponding to the media data, and it is ensured that the reassembled Real-time Transport Protocol packet and the Real-time Transport Protocol packet carrying the media data have the same stream feature.

For example, a serial number of the Real-time Transport Protocol packet carrying the Program Specific Information (that is, the reassembled Real-time Transport Protocol packet) and a serial number of the Real-time Transport Protocol packet carrying the media data are continuous. If the serial numbers of the Real-time Transport Protocol packets are sequenced, the serial number of the Real-time Transport Protocol packet carrying the Program Specific Information should be prior to the serial number of the Real-time Transport Protocol packet carrying the media data. For example, if a start serial number of the Real-time Transport Protocol packet carrying the media data is N and only one Real-time Transport Protocol packet carrying the Program Specific Information exists, the serial number of the Real-time Transport Protocol packet carrying the Program Specific Information is N-1. For example, N may be indicated by using 16 bits. When N is indicated by using 16 bits, the value of N may be between 1 and 65535.

Furthermore, for example, one or more Real-time Transport Protocol packets carrying the Program Specific Information may exist. When more than one Real-time Transport Protocol packet carrying the Program Specific Information exists, the serial numbers of the Real-time Transport Protocol packets carrying the Program Specific Information and the serial numbers of the Real-time Transport Protocol packets carrying the media data should be continuous and also the serial numbers of the Real-time Transport Protocol packets carrying the Program Specific Information are different and should also be continuous. For example, if a start serial number of the Real-time Transport Protocol packet carrying the media data is N and the number of Real-time Transport Protocol packets carrying the Program Specific Information is 2, the serial numbers of the two Real-time Transport Protocol packets carrying the Program Specific Information are respectively N-1 and N-2. For example, N may be indicated by using 16 bits. When N is indicated by using 16 bits, a value ofN may be between 1 and 65535.

For example, the stream feature involved in this embodiment may include: a source Internet Protocol (IP) address, a destination IP address, an IP protocol type, a source port, a destination port, a Real-time Transport Protocol Payload Type (PT) and a synchronization source (SSRC). This embodiment does not limit the content specifically included in the stream feature. Furthermore, in this embodiment, Program Specific Information may be acquired from prestored information. The process of acquiring Program Specific Information from stored information may be extracting Program Specific Information from a stored Transport Stream packet or acquiring a Transport Stream packet including the Program Specific Information from the stored information. In this manner, in a reassembly process, the extracted Program Specific Information or the acquired Transport Stream packet including the Program Specific Information can be reassembled into a Real-time Transport Protocol packet.

S110: Send the Real-time Transport Protocol packet carrying the Program Specific Information to the terminal apparatus. Subsequently, the process turns to S120.

Specifically, after a response message of channel change is sent to the terminal apparatus, the Real-time Transport Protocol packet carrying the Program Specific Information may be sent to the terminal apparatus.

For example, before the Real-time Transport Protocol packet carrying the Program Specific Information is sent to the terminal apparatus, the terminal apparatus may also be informed that a start serial number of the Real-time Transport Protocol packet is a serial number of the Real-time Transport Protocol packet carrying the Program Specific Information. For example, the terminal apparatus is informed that the start serial number of the Real-time Transport Protocol packet is N-1 or N-2. The content informed here may be carried in a response message for the channel change request.

S120: Send a Real-time Transport Protocol packet carrying the media data to the terminal apparatus. The media data is required to be decoded by using the Program Specific Information. A stream feature of the Real-time Transport Protocol packet carrying the media data is the same as the stream feature of the Real-time Transport Protocol packet carrying the Program Specific Information.

For example, an executer of Embodiment 1 may be logically referred to as a channel change server. The channel change server may be an independent network apparatus and may also be integrated with other logic functions in the network. For example, the channel change server is disposed in an access switch, or disposed in a router, or disposed in a convergence switch and a convergence router. The terminal apparatus in Embodiment 1 may be a Set Top Box (STB), and may also be another apparatus, for example, a home gateway integrated with an STB function.

As can be seen from the description of Embodiment 1, the Program Specific Information is reassembled into a Real-time Transport Protocol packet, and it is ensured that the stream feature of the Real-time Transport Protocol packet is the same as the stream feature of the Real-time Transport Protocol packet carrying the media data. In this manner, the Real-time Transport Protocol packet carrying the Program Specific Information is sent to the terminal apparatus and subsequently the Real-time Transport Protocol packet carrying the media data is sent to the terminal apparatus, so the Program Specific Information reaches the terminal apparatus earlier than the media data does, so as to avoid a phenomenon that the terminal apparatus fails to normally decode the received media data, and meanwhile also avoid a phenomenon that time delay occurs on channel change for waiting for Program Specific Information used to decode media data. Furthermore, Embodiment 1 may avoid a phenomenon such as picture blurs or freezes or a black screen and may avoid influences Program Specific Information on the time delay of the channel change caused by the Program Specific Information. By ensuring that the serial number of the Real-time Transport Protocol packet carrying the Program Specific Information and the serial number of the Real-time Transport Protocol packet carrying the media data are continuous, the process of requesting to re-transmit the Real-time Transport Protocol packet may be avoided. As Embodiment 1 may avoid the influences on the time delay of the channel change caused by decoding specific information, Embodiment 1 may implement Fast Channel change, so the channel change method in Embodiment 1 may be referred to as a Fast Channel change method and the channel change server in Embodiment 1 may be referred to as a Fast Channel change server.

The process of a channel change method in Embodiment 2 is shown in FIG. 2.

In FIG 2, S200: In a channel change process, a terminal apparatus receives a Real-time Transport Protocol packet. For example, the Real-time Transport Protocol packet may be sent by a Fast Channel change server.

The Real-time Transport Protocol packet received by the terminal apparatus may include a Real-time Transport Protocol packet carrying Program Specific Information and a Real-time Transport Protocol packet carrying media data. A stream feature of the Real-time Transport Protocol packet carrying the Program Specific Information is the same as a stream feature of the Real-time Transport Protocol packet carrying the media data. For example, the stream feature involved in this embodiment may be the stream feature recorded in the prior art. For example, the stream feature includes: a source IP address, a destination IP address, an IP protocol type, a source port, a destination port, a Real-time Transport Protocol PT and an SSRC. This embodiment does not limit the content specifically included in the stream feature.

For example, after sending a Fast Channel change request message, the terminal apparatus receives the Real-time Transport Protocol packet. The terminal apparatus usually receives the Real-time Transport Protocol packet after receiving a Fast Channel change response message for the Fast Channel change request message. The Fast Channel change response message may be an RTCP packet, that is, an RTCP based Fast Channel change response message. This embodiment also does not exclude the case that the terminal apparatus first receives the Real-time Transport Protocol packet and then receives the RTCP based Fast Channel change response message.

For example, the serial number of the Real-time Transport Protocol packet carrying the Program Specific Information and received by the terminal apparatus and the serial number of the Real-time Transport Protocol packet carrying the media data and received by the terminal apparatus are continuous. Also, if the serial numbers of the Real-time Transport Protocol packets are sequenced, the serial number of the Real-time Transport Protocol packet carrying the Program Specific Information is prior to the serial number of the Real-time Transport Protocol packet carrying the media data. The terminal apparatus may receive one or more Real-time Transport Protocol packets carrying the Program Specific Information. When the terminal apparatus receives more than one Real-time Transport Protocol packet carrying the Program Specific Information, the serial numbers of the Real-time Transport Protocol packets carrying the Program Specific Information and the serial number of the Real-time Transport Protocol packet carrying the media data are continuous. Also, the serial numbers of the Real-time Transport Protocol packets carrying the Program Specific Information are different and should also be continuous.

For example, the Fast Channel change response message may carry information informing the terminal apparatus that the start serial number of the Real-time Transport Protocol packet is the serial number of the Real-time Transport Protocol packet carrying the Program Specific Information. Upon receiving the Fast Channel change response message, the terminal apparatus may learn the start serial number of the received Real-time Transport Protocol packet.

S210: The terminal apparatus acquires the Program Specific Information from the received Real-time Transport Protocol packet. The terminal apparatus may acquire the Program Specific Information from one or more received Real-time Transport Protocol packets. That is to say, the one or more Real-time Transport Protocol packets received by the terminal apparatus carry the Program Specific Information.

S220: The terminal apparatus decodes the media data carried in the received Real-time Transport Protocol packet by using the acquired Program Specific Information.

Specifically, the terminal apparatus acquires the media data from the Real-time Transport Protocol packet carrying the media data and decodes the media data by using the Program Specific Information acquired from the Real-time Transport Protocol packet.

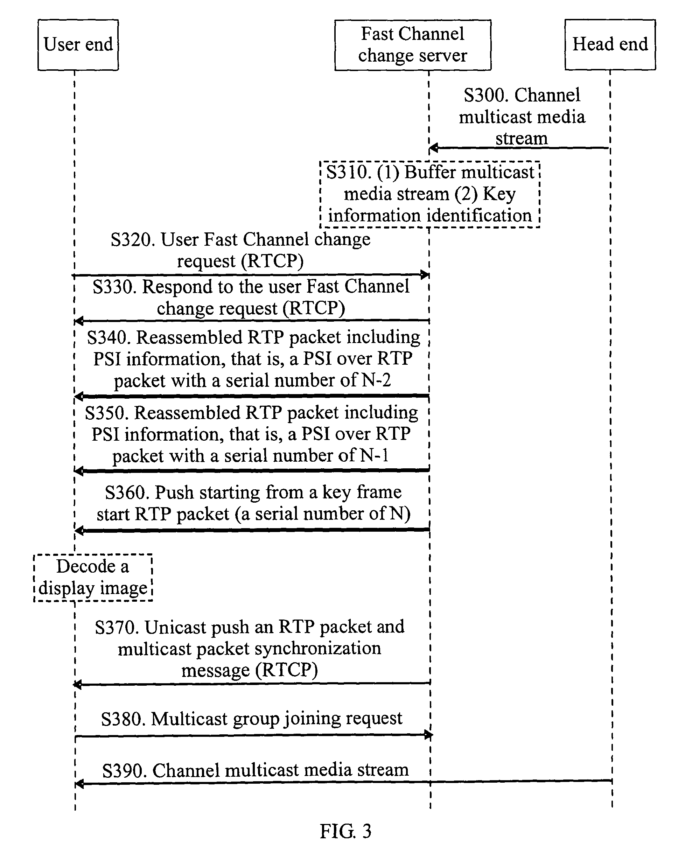

The process of a channel change method in Embodiment 3 is shown in FIG 3.

S300: A head end (that is, a program source end apparatus) sends a channel multicast media data stream to a Fast Channel change server. The channel multicast media data stream includes media data of a target program after change.

S310: The Fast Channel change server receives and buffers the channel multicast media data stream. The Fast Channel change server identifies key information in the channel multicast media data stream, that is, extracts PSI information from the multicast media data and identifies a key frame. For example, the extracting the PSI from the multicast media data may be: only extracting the PSI from the multicast media data; and may also be: extracting a TS packet including the PSI from the multicast media data. The key frame may be an IDR frame or an I frame.

S320: A user end (that is, a terminal apparatus) sends a channel change request message to a Fast Channel change server. For example, the Fast Channel change request message may be an RTCP packet. At this time, the RTCP packet may be referred to as an RTCP Fast Channel change (Fast Channel change, FCC) signaling stream.

S330: Upon receiving the Fast Channel change request, the Fast Channel change server returns a Fast Channel change response message to the user end in response to the Fast Channel change request message sent by the user end. For example, the Fast Channel change response message may be an RTCP packet. At this time, the RTCP packet may be referred to as an RTCP FCC signaling stream. For example, the Fast Channel change response message may carry information informing the user end that the start serial number of the Real-time Transport Protocol packet is the serial number of the Real-time Transport Protocol packet carrying the Program Specific Information. In this manner, upon receiving the Fast Channel change response message, the user end may learn the start serial number of the received Real-time Transport Protocol packet, that is, N-2.

S340: The Fast Channel change server acquires PSI corresponding to a target program from a buffer. For example, after judging that the target program exists, the Fast Channel change server acquires the PSI corresponding to the target program from the buffer. The Fast Channel change server reassembles the PSI into an RTP packet. The reassembled RTP packet may be referred to as a PSI over RTP packet. If the serial number of the start RTP packet of the key frame is N and two RTP packets carry the PSI, the serial number of the first PSI over RTP packet is N-2 and the serial number of the second PSI over RTP packet is N-1. Furthermore, the stream feature (for example, a source IP address, a destination IP address, an IP protocol type, a source port, a destination port, an RTP PT and an SSRC) of the PSI over RTP packet is the same as the stream feature of the RTP packet of the key frame. The Fast Channel change server pushes the PSI over RTP packet with the serial number being N-2 to the user end.

It should be noted that if the TS packet extracted from the multicast media data in S310 includes the PSI, then, in S340, the TS packet including the PSI may be reassembled into an RTP packet. At this time, the stream feature of the RTP packet carrying the PSI may also be the same as the stream feature of the RTP packet of the key frame, and the serial numbers are continuous.

S350: The Fast Channel change server pushes the PSI over RTP packet with the serial number being N-1 to the user end.

The user end acquires the PSI from the received PSI over RTP packet.

S360: The Fast Channel change server pushes the RTP packets to the user end starting from the start RTP packet of the key frame. The serial number of the start RTP packet of the key frame is N.

Upon receiving the RTP packets of the key frame, the user end may decode the media data carried in the RTP packets of the key frame by using the acquired PSI.

S370: When the Fast Channel change server determines that the RTP unicast stream pushed to the user end (that is, the pushed media data in S360) is synchronous with a multicast stream, the Fast Channel change server sends a synchronization message to the user end. The multicast packet synchronization message may be an RTCP packet. The synchronization message is used for informing the user end to join a multicast group of the target program.

S380: Upon receiving the synchronization message, the user end sends a multicast group joining request message to a network apparatus of the Fast Channel change server to request to join a multicast group of the target program. The network apparatus of the Fast Channel change server is, for example, a switch or a router.

S390: Upon receiving the multicast group joining request message, the network apparatus of the Fast Channel change server pushes a multicast media stream of the target program sent from the head end to the user end.

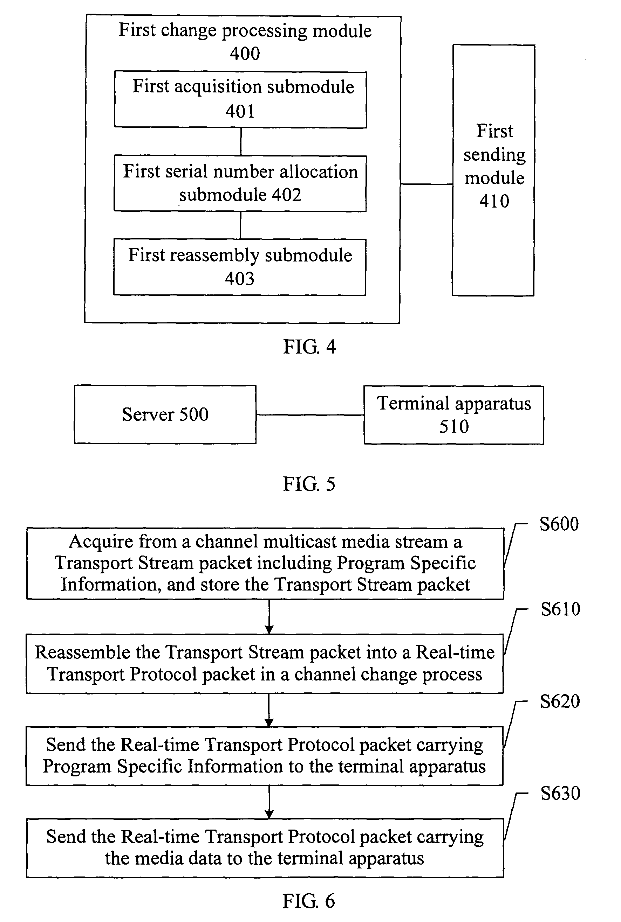

A channel change device in Embodiment 4 may be logically referred to as a channel change server. The device may be disposed in an access switch, may also be disposed in a router, and may also be disposed in a convergence switch and a convergence router. A schematic diagram of the device is shown in FIG 4.

The device in FIG 4 includes a first change processing module 400 and a first sending module 410.

The first change processing module 400 is configured to, in a channel change process, reassemble Program Specific Information into a Real-time Transport Protocol packet. A stream feature of the Real-time Transport Protocol packet is the same as a stream feature of a Real-time Transport Protocol packet carrying media data. The Program Specific Information is used for decoding a media data stream. The media data is media data of a target program of channel change. For example, the first change processing device 400 may acquire Program Specific Information from information stored in the device. The process that the first change processing module 400 acquires the Program Specific Information from the information stored in the device may be: extracting the Program Specific Information from a stored Transport Stream packet, and may also be: acquiring the Transport Stream packet including the Program Specific Information from the stored information. The first change processing module 400 may reassemble the extracted Program Specific Information or the acquired Transport Stream packet including Program Specific Information into a Real-time Transport Protocol packet.

For example, a serial number of the Real-time Transport Protocol packet carrying the Program Specific Information and reassembled by the first change processing module 400 and a serial number of the Real-time Transport Protocol packet carrying the media data are continuous. Also, if the serial numbers of the Real-time Transport Protocol packets are sequenced, the serial number of the Real-time Transport Protocol packet carrying the Program Specific Information should be prior to the serial number of the Real-time Transport Protocol packet carrying the media data. For example, if the start serial number of the Real-time Transport Protocol packet carrying the media data is N and only one Real-time Transport Protocol packet carrying the Program Specific Information exists, the serial number of the Real-time Transport Protocol packet carrying the Program Specific Information is N-1.

For example, the first change processing module 400 may reassemble one or more Real-time Transport Protocol packets carrying the Program Specific Information. When more than one Real-time Transport Protocol packet carrying the Program Specific Information exists, the first change processing module 400 should not only ensure that the serial numbers of the Real-time Transport Protocol packets carrying the Program Specific Information and the serial number of the Real-time Transport Protocol packet carrying the media data are continuous, but also ensure that the serial numbers of the Real-time Transport Protocol packets carrying the Program Specific Information are different and also continuous during reassembly of the Real-time Transport Protocol packets. For example, if the start serial number of the Real-time Transport Protocol packet carrying the media data is N and the first change processing module 400 reassembles two Real-time Transport Protocol packets carrying the Program Specific Information, the first change processing module 400 should ensure that the serial numbers of the two Real-time Transport Protocol packets carrying the Program Specific Information are respectively N-1 and N-2.

For example, the stream feature mentioned in this embodiment may be a stream feature recorded in the prior art. For example, the stream feature includes: a source IP address, a destination IP address, an IP protocol type, a source port, a destination port, a Real-time Transport Protocol PT and a SSRC. This embodiment does not limit the content specifically included in the stream feature.

The first sending module 410 is configured to send the Real-time Transport Protocol packet carrying the Program Specific Information and reassembled by the first change processing module 400 to the terminal apparatus, and subsequently, send a Real-time Transport Protocol packet carrying the media data to the terminal apparatus. That is to say, the first sending module 410 transports the Program Specific Information and the media data decoded by using the Program Specific Information through Transport Streams having the same stream feature. For example, after sending a channel change response message to the terminal apparatus, the first sending module 410 may send a Real-time Transport Protocol packet carrying the Program Specific Information to the terminal apparatus. Before sending the Real-time Transport Protocol packet carrying the Program Specific Information to the terminal apparatus, the first sending module 410 may send a channel change response message to the terminal apparatus first. The channel change response message carries information informing the terminal apparatus that a start serial number of the Real-time Transport Protocol packet is the serial number of the Real-time Transport Protocol packet carrying the Program Specific Information. The terminal apparatus may be an STB or may also be an apparatus such as a home gateway integrated with an STB function.

For example, the first change processing module 400 includes a first acquisition sub-module 401, a first serial number allocation sub-module 402 and a first reassembly sub-module 403.

The first acquisition sub-module 401 is configured to acquire Program Specific Information for decoding a media data stream after a device where the first acquisition sub-module 401 is located receives a channel change request sent by the terminal apparatus. For example, after the device where the first acquisition sub-module 401 is located receives the channel change request sent from the terminal apparatus, the first acquisition sub-module 401 may first determine a target program of the channel change according to the channel change request. Next, the first acquisition sub-module 401 judges whether the target program of the channel change exists. If the target program exists, the Program Specific Information of the target program is acquired from a buffer.

The first serial number allocation sub-module 402 is configured to allocate a serial number to the Real-time Transport Protocol packet carrying the Program Specific Information. The serial number and a serial number of the Real-time Transport Protocol packet carrying the media data are continuous, and for the sequencing of the serial numbers, the serial number of the Real-time Transport Protocol packet carrying the Program Specific Information is prior to the serial number of the Real-time Transport Protocol packet carrying the media data. If the start serial number of the Real-time Transport Protocol packet carrying the media data is N and one Real-time Transport Protocol packet carrying the Program Specific Information exists, the serial number allocated to the Real-time Transport Protocol packet carrying the Program Specific Information by the first serial number allocation sub-module 402 is N-1. If the start serial number of the Real-time Transport Protocol packet carrying the media data is N and two Real-time Transport Protocol packets carrying the Program Specific Information exist, the serial numbers allocated to the two Real-time Transport Protocol packets carrying the Program Specific Information by the first serial number allocation sub-module 402 are respectively N-1 and N-2.

The first reassembly sub-module 403 is configured to reassemble the program information acquired by the first acquisition sub-module 401 into a Real-time Transport Protocol packet. The serial number of the reassembled Real-time Transport Protocol packet is the serial number allocated by the first serial number allocation sub-module 402. Also, the first reassembly sub-module 403 may reassemble the Program Specific Information into the Real-time Transport Protocol packet by using a stream feature corresponding to the media data. The Real-time Transport Protocol packet reassembled by the first reassembly sub-module 403 and the Real-time Transport Protocol packet carrying the media data have the same stream feature.

As can be seen from the description of Embodiment 4, the first change processing module 400 reassembles Program Specific Information into a Real-time Transport Protocol packet and ensures that a stream feature of the Real-time Transport Protocol packet is the same as a stream feature of a Real-time Transport Protocol packet carrying media data. In this manner, the first sending module 410 sends the Real-time Transport Protocol packet carrying the Program Specific Information to the terminal apparatus and subsequently sends a Real-time Transport Protocol packet carrying the media data to the terminal apparatus. Therefore, the Program Specific Information may reach the terminal apparatus earlier than the media data does, so as to avoid a phenomenon that the terminal apparatus fails to normally decode the received media data, and meanwhile, avoid a phenomenon of waiting for the Program Specific Information used to decode the media data. Furthermore, Embodiment 4 avoids a phenomenon of picture blurs or freezes or a black screen and avoids influences of the Program Specific Information on the time delay of the channel change. The first change processing module 400 ensures that the serial number of the Real-time Transport Protocol packet carrying the Program Specific Information and the serial number of the Real-time Transport Protocol packet carrying the media data are continuous, so as to avoid the process of requesting to retransmit the Real-time Transport Protocol packet. As Embodiment 4 may avoid the influences of the decoding specific information on the time delay of the channel change, the channel change device in Embodiment 4 may implement fast change of the channel, so the channel change device in Embodiment 4 may implement Fast Channel change. The channel change device in Embodiment 4 may be referred to as a Fast Channel change device.

A schematic diagram of a channel change system in Embodiment 5 is shown in FIG 5.

The system in FIG 5 includes: a server 500 and a terminal apparatus 510. The server 500 may be referred to as a channel change server. The server 500 may be disposed in an access switch, may also be disposed in a router, and may also be disposed in a convergence switch and a convergence router. The terminal apparatus 510 may be an STB and may also be another apparatus integrated with an STB function, such as a home gateway. Although only one terminal apparatus 510 is shown in the system in FIG 5, obviously, the system may include multiple terminal apparatuses 510.

The server 500 is configured to, in a channel change process, reassemble Program Specific Information for decoding a media data stream into a Real-time Transport Protocol packet. A stream feature of the Real-time Transport Protocol packet is the same as a stream feature of a Real-time Transport Protocol packet carrying the media data. The server 500 sends the Real-time Transport Protocol packet carrying the Program Specific Information to the terminal apparatus 510. Subsequently, the server 500 sends the Real-time Transport Protocol packet carrying the media data. The media data may be media data of a target program of channel change.

The server 500 may acquire Program Specific Information of a target program of channel change from information stored by the server 500. The server 500 may acquire the Program Specific Information from a channel multicast media stream received by the server 500 and store the Program Specific Information. Furthermore, the server 500 may, upon receiving the channel multicast media stream sent from a program source end apparatus, acquire the Program Specific Information from the channel multicast media stream and store the Program Specific Information, and may also acquire a Transport Stream packet including the Program Specific Information from the channel multicast media stream and store the Transport Stream packet. When the Transport Stream packet including the Program Specific Information is stored in the server 500, during reassembly of the Real-time Transport Protocol packet, the server 500 may directly acquire the Transport Stream packet including the Program Specific Information and reassemble the Transport Stream packet into a Real-time Transport Protocol packet.

The serial number of the Real-time Transport Protocol packet carrying the Program Specific Information and reassembled by the server 500 and the serial number of the Real-time Transport Protocol packet carrying the media data are continuous. Also, if the serial numbers of the Real-time Transport Protocol packets are sequenced, the serial number of the Real-time Transport Protocol packet carrying the Program Specific Information should be prior to the serial number of the Real-time Transport Protocol packet carrying the media data. For example, if the start serial number of the Real-time Transport Protocol packet carrying the media data is N and one Real-time Transport Protocol packet carrying the Program Specific Information exists, the server 500 should ensure that the serial number of the reassembled Real-time Transport Protocol packet carrying the Program Specific Information is N-1.

The server 500 may reassemble one or more Real-time Transport Protocol packets carrying the Program Specific Information. When more than one Real-time Transport Protocol packet carrying the Program Specific Information exists, during the reassembly of the Real-time Transport Protocol packets, the server 500 should not only ensure that the serial numbers of the Real-time Transport Protocol packets carrying the Program Specific Information and the serial number of the Real-time Transport Protocol packet carrying the media data are continuous, but also ensure that the serial numbers of the Real-time Transport Protocol packets carrying the Program Specific Information are different and also continuous. For example, if the start serial number of the Real-time Transport Protocol packet carrying the media data is N and the server 500 reassembles two Real-time Transport Protocol packets carrying the media data, the server 500 should ensure that the serial numbers of the two Real-time Transport Protocol packets carrying the media data are respectively N-1 and N-2.

The server 500 further needs to inform the terminal apparatus that the start serial number of the Real-time Transport Protocol packet is the serial number of the Real-time Transport Protocol packet carrying the Program Specific Information. The informing information may be carried in a channel change response message sent to the terminal apparatus.

It should be noted that the stream feature involved in this embodiment may be the stream feature recorded in the prior art. For example, the stream feature includes: a source IP address, a destination IP address, an IP protocol type, a source port, a destination port, a Real-time Transport Protocol PT and an SSRC. This embodiment does not limit the content specifically included in the stream feature.

The structure of the server 500 may be as described in Embodiment 4, which is no longer repeatedly described here.

The terminal apparatus 510 is configured to receive a Real-time Transport Protocol packet sent from the server 500, acquire Program Specific Information from the received Real-time Transport Protocol packet, and decode the media data carried in the received Real-time Transport Protocol packet by using the Program Specific Information. The media data is media data of a target program of channel change.

The terminal apparatus 510 may acquire the Program Specific Information from the one or more received Real-time Transport Protocol packets. That is to say, the one or more Real-time Transport Protocol packets received by the terminal apparatus 510 carry the Program Specific Information.

The terminal apparatus 510 may learn that the start serial number of the Real-time Transport Protocol packet is the serial number of the Real-time Transport Protocol packet carrying the Program Specific Information according to the informing information of the server 500. For example, the terminal apparatus 510 may learn that the start serial number of the Real-time Transport Protocol packet is the serial number of the Real-time Transport Protocol packet carrying the Program Specific Information according to the information carried in the received channel change response message.

The process of a channel change method in Embodiment 6 is shown in FIG 6.

In FIG 6, S600: Acquire a Transport Stream packet including Program Specific Information from a received channel multicast media stream and store the Transport Stream packet. The Program Specific Information is used for decoding media data.

S610: In a channel change process, acquire a Transport Stream packet including Program Specific Information from the stored information and reassemble the Transport Stream packet into a Real-time Transport Protocol packet. The Program Specific Information is Program Specific Information of a target program of channel change. A stream feature of the Real-time Transport Protocol packet carrying the Program Specific Information is the same as a stream feature of a Real-time Transport Protocol packet carrying the media data. The serial number of the Real-time Transport Protocol packet carrying the Program Specific Information and the serial number of the Real-time Transport Protocol packet carrying the media data are continuous. For the sequencing of the serial numbers, the serial number of the Real-time Transport Protocol packet carrying the Program Specific Information is prior to the serial number of the Real-time Transport Protocol packet carrying the media data. Step S610 may transport the Program Specific Information and the media data required to be decoded by using the Program Specific Information through Transport Streams having the same stream feature.

Specifically, upon receiving a channel change request sent by a terminal apparatus, a target program of channel change may be first determined according to the channel change request. Next, it is judged whether the target program of the channel change exists. If the target program exists, the Transport Stream packet including Program Specific Information of the target program is acquired from a buffer and the acquired Transport Stream packet is reassembled into a Real-time Transport Protocol packet by using a stream feature corresponding to the media data of the target program, so it is ensured that the reassembled Real-time Transport Protocol packet and the Real-time Transport Protocol packet carrying the media data have the same stream feature.

One or more Real-time Transport Protocol packets carrying the Transport Stream packet including the Program Specific Information may exist. If the start serial number of the Real-time Transport Protocol packet carrying the media data is N and one Real-time Transport Protocol packet carrying the Transport Stream packet including the Program Specific Information exists, the serial number of the Real-time Transport Protocol packet carrying the Transport Stream packet including the Program Specific Information is N-1. If the start serial number of the Real-time Transport Protocol packet carrying the media data is N and two Real-time Transport Protocol packets carrying the Transport Stream packet including the Program Specific Information exist, the serial numbers of the two Real-time Transport Protocol packets carrying the Transport Stream packet including the Program Specific Information are respectively N-1 and N-2.

It should be noted that the stream feature mentioned in this embodiment may be the stream feature recorded in the prior art. For example, the stream feature includes: a source IP address, a destination IP address, an IP protocol type, a source port, a destination port, a Real-time Transport Protocol PT and an SSRC. This embodiment does not limit the content specifically included in the stream feature.

S620: Send the Real-time Transport Protocol packet carrying the Program Specific Information to the terminal apparatus. Specifically, after a channel change response message is sent to the terminal apparatus, a Real-time Transport Protocol packet carrying the Program Specific Information is sent to the terminal apparatus. The channel change response message sent to the terminal apparatus may carry information informing the terminal apparatus that the start serial number of the Real-time Transport Protocol packet is the serial number of the Real-time Transport Protocol packet carrying the Program Specific Information. In this manner, upon receiving the channel change response message, the terminal apparatus may learn the start serial number of the received Real-time Transport Protocol packet, for example, N-2.

S630: A Real-time Transport Protocol packet carrying the media data is sent to the terminal apparatus. The media data is media data of a target program of channel change. A stream feature of a Real-time Transport Protocol packet carrying the media data is the same as a stream feature of the Real-time Transport Protocol packet carrying the Program Specific Information.

An executor of Embodiment 6 may be logically referred to as a channel change server. For example, the channel change server may be an independent network apparatus, and may also be integrated with other logic functions in the network. For example, the channel change server is disposed in an access switch, or disposed in a router, or disposed in a convergence switch and a convergence router. The terminal apparatus in Embodiment 6 may be an STB, and may also be another apparatus, for example, a home gateway integrated with an STB function.

As can be seen from the description in Embodiment 6, a transmission packet including Program Specific Information is acquired from a received channel multicast media stream and the transmission packet is reassembled into a Real-time Transport Protocol packet, so the Program Specific Information may be conveniently reassembled into a Real-time Transport Protocol packet. By ensuring that a stream feature of the Real-time Transport Protocol packet is the same as a stream feature of a Real-time Transport Protocol packet carrying media data, in this manner, the Real-time Transport Protocol packet carrying the Program Specific Information is sent to the terminal apparatus, and subsequently, the Real-time Transport Protocol packet carrying the media data is sent to the terminal apparatus. Therefore, the Program Specific Information may reach the terminal apparatus earlier than the media data does, so as to avoid a phenomenon that the terminal apparatus fails to normally decode the received media data, and meanwhile also avoid a phenomenon of waiting for the Program Specific Information used to decode the media data. Furthermore, Embodiment 6 may avoid a phenomenon of picture blurs or freezes or a black screen and may avoid influences of the Program Specific Information on the time delay of the channel change. By ensuring that the serial number of the Real-time Transport Protocol packet carrying the Program Specific Information and the serial number of the Real-time Transport Protocol packet carrying the media data are continuous, the process of requesting to retransmit the Real-time Transport Protocol packet may be avoided. As Embodiment 6 may avoid influences of the decoding specific information on the channel change time delay, Embodiment 6 may implement Fast Channel change. Therefore, the channel change method in Embodiment 6 may be referred to as a Fast Channel change method. The channel change server in Embodiment 6 may be referred to as a Fast Channel change server.

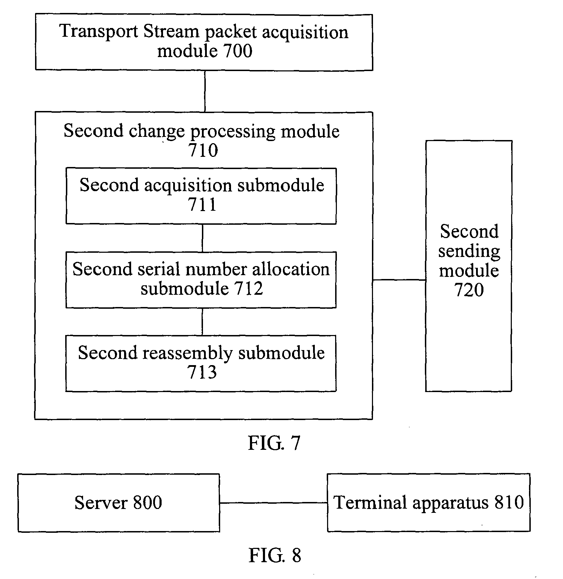

A channel change device in Embodiment 7 may be logically referred to as a channel change server. The device may be disposed in an access switch, may be disposed in a router, and may also be disposed in a convergence switch and a convergence router. A schematic diagram of the device is shown in FIG 7.

The device in FIG 7 includes: a Transport Stream packet acquisition module 700, a second change processing module 710 and a second sending module 720.

The Transport Stream packet acquisition module 700 is configured to acquire a Transport Stream packet including Program Specific Information from a received channel multicast media stream and store the Transport Stream packet. The Program Specific Information is used for decoding media data. The channel multicast media stream may be sent from a source end apparatus of the program.

The second change processing module 710 is configured to, in a channel change process, reassemble a Transport Stream packet including Program Specific Information and acquired from the stored information into a Real-time Transport Protocol packet. The Program Specific Information is Program Specific Information of a target program of channel change.

The second change processing module 710 may use a stream feature of a Real-time Transport Protocol packet carrying the media data during reassembly of the Real-time Transport Protocol packet. That is to say, the stream feature of the Real-time Transport Protocol packet carrying the Program Specific Information is the same as a stream feature of a Real-time Transport Protocol packet carrying the media data. Furthermore, the serial number of the Real-time Transport Protocol packet carrying the Program Specific Information and reassembled by the second change processing module 710 and the serial number of the Real-time Transport Protocol packet carrying the media data are continuous. For the sequencing of the serial numbers, the serial number of the Real-time Transport Protocol packet carrying the Program Specific Information is prior to the serial number of the Real-time Transport Protocol packet carrying the media data.

The second change processing module 710 may transport the Program Specific Information and the media data required to be decoded by using the Program Specific Information through Transport Streams having the same stream feature. Upon receiving a channel change request sent by a terminal apparatus, the second change processing module 710 first determines a target program of channel change according to the channel change request. Next, the second change processing module 710 judges whether the target program of the channel change exists. If the target program exists, the Transport Stream packet including the Program Specific Information of the target program is acquired from the stored information and the acquired Transport Stream packet is reassembled into a Real-time Transport Protocol packet by using the stream feature corresponding to the media data of the target program. It is ensured that the reassembled Real-time Transport Protocol packet and the Real-time Transport Protocol packet carrying the media data have the same stream feature.

The second change processing module 710 may reassemble one or more Real-time Transport Protocol packets carrying the Transport Stream packet including the Program Specific Information. If the start serial number of the Real-time Transport Protocol packet carrying the media data is N and one Real-time Transport Protocol packet carrying the Transport Stream packet including the Program Specific Information exists, the serial number of the Real-time Transport Protocol packet carrying the Transport Stream packet including the Program Specific Information and reassembled by the second change processing module 710 may be N-1. If the start serial number of the Real-time Transport Protocol packet carrying the media data is N and two Real-time Transport Protocol packets carrying the Transport Stream packet including the Program Specific Information exist, the serial numbers of the two Real-time Transport Protocol packets carrying the Transport Stream packet including the Program Specific Information and reassembled by the second change processing module 710 may be respectively N-1 and N-2.

It should be noted that the stream feature mentioned in this embodiment may be the stream feature recorded in the prior art. For example, the stream feature includes: a source IP address, a destination IP address, an IP protocol type, a source port, a destination port, a Real-time Transport Protocol PT and an SSRC. This embodiment does not limit the content specifically included in the stream feature.

The second change processing module 710 may include: a second acquisition sub-module 711, a second serial number allocation sub-module 712 and a second reassembly sub-module 713.

The second acquisition sub-module 711 is configured to, after a device where the second acquisition sub-module 711 is located receives a channel change request sent from the terminal apparatus, acquire a Transport Stream packet including Program Specific Information from the stored information. Specifically, after the device where the second acquisition sub-module 711 is located receives the channel change request sent from the terminal apparatus, the second acquisition sub-module 711 may first determine a target program of channel change according to the channel change request. Next, the second acquisition sub-module 711 judges whether the target program of the channel change exists. If the target program exists, the Transport Stream packet including the Program Specific Information of the target program is acquired from the stored information.

The second serial number allocation sub-module 712 is configured to allocate a serial number to a Real-time Transport Protocol packet carrying the Program Specific Information. The serial number and the serial number of the Real-time Transport Protocol packet carrying the media data are continuous. For the sequencing of the serial numbers, the serial number of the Real-time Transport Protocol packet carrying the Program Specific Information is prior to the serial number of the Real-time Transport Protocol packet carrying the media data. If the start serial number of the Real-time Transport Protocol packet carrying the media data is N and one Real-time Transport Protocol packet carrying the Program Specific Information exists, the serial number allocated to the Real-time Transport Protocol packet carrying the Program Specific Information by the second serial number allocation sub-module 712 is N-1. If the start serial number of the Real-time Transport Protocol packet carrying the media data is N and two Real-time Transport Protocol packets carrying the Program Specific Information exist, the serial numbers allocated to the two Real-time Transport Protocol packets carrying the Program Specific Information by the second serial number allocation sub-module 712 are respectively N-1 and N-2.

The second reassembly sub-module 713 is configured to reassemble the Transport Stream packet acquired by the second acquisition sub-module 711 into a Real-time Transport Protocol packet. The serial number of the reassembled Real-time Transport Protocol packet is the serial number allocated by the serial number allocation sub-module 712. The second reassembly sub-module 713 may reassemble the Transport Stream packet including the Program Specific Information into the Real-time Transport Protocol packet by using a stream feature corresponding to the media data. The stream feature of the reassembled Real-time Transport Protocol packet is the same as a stream feature of a Real-time Transport Protocol packet carrying the media data. The media data is media data of the target program.

The second sending module 720 is configured to send the Real-time Transport Protocol packet carrying the Program Specific Information to the terminal apparatus, and subsequently send the Real-time Transport Protocol packet carrying the media data to the terminal apparatus. After sending a channel change response message to the terminal apparatus, the second sending module 720 may send the Real-time Transport Protocol packet carrying the Program Specific Information to the terminal apparatus. Before sending the Real-time Transport Protocol packet carrying the Program Specific Information to the terminal apparatus, the second sending module 720 may first send the channel change response message to the terminal apparatus. The channel change response message carries information informing the terminal apparatus that the start serial number of the Real-time Transport Protocol packet is the serial number of the Real-time Transport Protocol packet carrying the Program Specific Information.

A schematic diagram of a channel change system in Embodiment 8 is shown in FIG 8.

The system in FIG 8 includes: a server 800 and a terminal apparatus 810. The server 800 may be referred to as a channel change server. The server 800 may be disposed in an access switch, may also be disposed in a router, and may be disposed in a convergence switch and a convergence router. The terminal apparatus 810 may be an STB, and may also be another apparatus such as a home gateway integrated with the STB function. Although the system in FIG 8 only shows one terminal apparatus 810, obviously, the system may include multiple terminal apparatuses 810.

The server 800 is configured to acquire a Transport Stream packet including Program Specific Information from a received channel multicast media stream and store the Transport Stream packet. The Program Specific Information is used for decoding media data. In a channel change process, the server 800 acquires the Transport Stream packet from the stored information and reassembles the Transport Stream packet acquired from the stored information into a Real-time Transport Protocol packet. The channel multicast media stream may be sent from a program source end apparatus.

The serial number of the Real-time Transport Protocol packet carrying the Program Specific Information and reassembled by the server 800 and the serial number of the Real-time Transport Protocol packet carrying the media data are continuous. Also, if the serial numbers of the Real-time Transport Protocol packets are sequenced, the serial number of the Real-time Transport Protocol packet carrying the Program Specific Information may be prior to the serial number of the Real-time Transport Protocol packet carrying the media data. For example, if the start serial number of the Real-time Transport Protocol packet carrying the media data is N and one Real-time Transport Protocol packet carrying the Program Specific Information exists, the server 800 may ensure that the reassembled serial number of the Real-time Transport Protocol packet carrying the Program Specific Information is N-1.

The server 800 may reassemble one or more Real-time Transport Protocol packets carrying the Program Specific Information. When more than one Real-time Transport Protocol packet carrying the Program Specific Information exists, during reassembly of the Real-time Transport Protocol packets, the server 800 ensures that the serial numbers of the Real-time Transport Protocol packets carrying the Program Specific Information and the serial number of the Real-time Transport Protocol packet carrying the media data are continuous and also ensures that the serial numbers of the Real-time Transport Protocol packets carrying the Program Specific Information are different and continuous. For example, if the start serial number of the Real-time Transport Protocol packet carrying the media data is N and two Real-time Transport Protocol packets carrying the media data and reassembled by the server 800 exist, the server 800 may ensure that the serial numbers of the two Real-time Transport Protocol packets carrying the media data are respectively N-1 and N-2.

The server 800 further needs to inform the terminal apparatus that the start serial number of the Real-time Transport Protocol packet is the serial number of the Real-time Transport Protocol packet carrying the Program Specific Information. The informing information may be carried in a channel change response message sent to the terminal apparatus. For example, the terminal apparatus is informed that the start serial number of the Real-time Transport Protocol packet is N-2.

It should be noted that the stream feature mentioned in this embodiment may be the stream feature recorded in the prior art. For example, the stream feature includes: a source IP address, a destination IP address, an IP protocol type, a source port, a destination port, a Real-time Transport Protocol PT and an SSRC. This embodiment does not limit the content specifically included in the stream feature.

The structure of the server 800 may be as described in Embodiment 7, which is no longer repeatedly described here.

The terminal apparatus 810 is configured to receive a Real-time Transport Protocol packet sent from the server 800, acquire Program Specific Information from the received Real-time Transport Protocol packet, and decode the media data carried in the received Real-time Transport Protocol packet by using the Program Specific Information. The media data is media data of a target program of channel change.

The terminal apparatus 810 may acquire Program Specific Information from the one or more received Real-time Transport Protocol packets. That is to say, the one or more Real-time Transport Protocol packets received by the terminal apparatus 810 carry the Program Specific Information.

The terminal apparatus 810 may learn based on the informing information of the server 800 that the start serial number of the Real-time Transport Protocol packet is the serial number of the Real-time Transport Protocol packet carrying the Program Specific Information. For example, the terminal apparatus 810 may learn based on the information carried in the received channel change response message that the start serial number of the Real-time Transport Protocol packet is the serial number of the Real-time Transport Protocol packet carrying the Program Specific Information.

Through the above descriptions of the embodiments, it is apparent to those skilled in the art that, the present invention may be accomplished by software together with a necessary universal hardware platform, and definitely may also be completely accomplished by hardware. In most cases, the former is a preferred implementation manner. Therefore, all or a part of the above technical solutions of the present invention that make contributions to the prior art can be substantially embodied in the form of a software product. The computer software product may be stored in a computer readable storage medium such as a Read-Only Memory (ROM)/Random Access Memory (RAM), a magnetic disk or an optical disk, and contain several instructions to instruct computer equipment (for example, a personal computer, a server, or network equipment) to perform the methods described in the embodiments of the present invention or in some parts of the embodiments of the present invention.

Although the present invention has been disclosed through the embodiments, it should be understood by persons of ordinary skill in the art that various variations and modifications of the present invention do not depart from the spirit of the present invention, and the appended claims in the application document of the present invention shall cover these variations and modifications.

## Claims

1. A channel change method, comprising:
reassembling, in a channel change process, Program Specific Information for decoding media data into a Real-time Transport Protocol packet, wherein a stream feature of the Real-time Transport Protocol packet is the same as a stream feature of a Real-time Transport Protocol packet carrying the media data;
sending the Real-time Transport Protocol packet carrying the Program Specific Information to a terminal apparatus; and
sending the Real-time Transport Protocol packet carrying the media data to the terminal apparatus.

2. The method according to claim 1, wherein a serial number of the Real-time Transport Protocol packet carrying the Program Specific Information and a serial number of the Real-time Transport Protocol packet carrying the media data are continuous, for sequencing of the serial numbers, the serial number of the Real-time Transport Protocol packet carrying the Program Specific Information is prior to the serial number of the Real-time Transport Protocol packet carrying the media data, and the method, before the sending the Real-time Transport Protocol packet carrying the Program Specific Information to the terminal apparatus, further comprises:
informing the terminal apparatus that a start serial number of the Real-time Transport Protocol packet is the serial number of the Real-time Transport Protocol packet carrying the Program Specific Information.

3. The method according to claim 1, wherein one or more Real-time Transport Protocol packets carrying the Program Specific Information exist, and when multiple Real-time Transport Protocol packets carrying the Program Specific Information exist, the serial numbers of the Real-time Transport Protocol packets carrying the Program Specific Information are different and continuous.

4. The method according to claim 1 or 2 or 3, wherein the reassembling, in the channel change process, the Program Specific Information for decoding the media data stream into the Real-time Transport Protocol packet comprises:
after receiving a channel change request sent by the terminal apparatus and determining that a target program of the channel change exists, acquiring Program Specific Information or acquiring a Transport Stream packet comprising Program Specific Information of the target program from a buffer, and
reassembling the Program Specific Information or the Transport Stream packet comprising the Program Specific Information into the Real-time Transport Protocol packet.

5. A channel change device, comprising:
a first change processing module, configured to reassemble, in a channel change process, Program Specific Information for decoding a media data stream into a Real-time Transport Protocol packet, wherein a stream feature of the Real-time Transport Protocol packet is the same as a stream feature of a Real-time Transport Protocol packet carrying the media data; and
a first sending module, configured to send the Real-time Transport Protocol packet carrying the Program Specific Information to a terminal apparatus, and send a Real-time Transport Protocol packet carrying the media data to the terminal apparatus.

6. The device according to claim 5, wherein the first change processing module comprises:
a first acquisition sub-module, configured to, after the device receives a channel change request sent from the terminal apparatus, acquire the Program Specific Information for decoding the media data stream;
a first serial number allocation sub-module, configured to allocate a serial number to the Real-time Transport Protocol packet carrying the Program Specific Information, wherein the serial number and a serial number of the Real-time Transport Protocol packet carrying the media data are continuous, and for sequencing of the serial numbers, the serial number of the Real-time Transport Protocol packet carrying the Program Specific Information is prior to the serial number of the Real-time Transport Protocol packet carrying the media data; and
a first reassembly sub-module, configured to reassemble the program information into a Real-time Transport Protocol packet, wherein the serial number of the reassembled Real-time Transport Protocol packet is a serial number allocated by the first serial number allocation sub-module; and
the first sending module is further configured to inform the terminal apparatus that a start serial number of the Real-time Transport Protocol packet is the serial number of the Real-time Transport Protocol packet carrying the Program Specific Information.

7. A channel change system, comprising:
a server, configured to reassemble, in a channel change process, Program Specific Information for decoding a media data stream into a Real-time Transport Protocol packet, wherein a stream feature of the Real-time Transport Protocol packet is the same as a stream feature of a Real-time Transport Protocol packet carrying the media data, and the server sends the Real-time Transport Protocol packet carrying the Program Specific Information, and sends the Real-time Transport Protocol packet carrying the media data; and
a terminal apparatus, configured to acquire the Program Specific Information from the received Real-time Transport Protocol packet, and decode the media data carried in the received Real-time Transport Protocol packet by using the Program Specific Information.

8. A channel change method, comprising:
acquiring a Transport Stream packet comprising Program Specific Information from a received channel multicast media stream and storing the Transport Stream packet, wherein the Program Specific Information is used for decoding media data;
acquiring, in a channel change process, the Transport Stream packet comprising the Program Specific Information from the stored information, and reassembling the Transport Stream packet into a Real-time Transport Protocol packet;
sending the Real-time Transport Protocol packet carrying the Program Specific Information to a terminal apparatus; and
sending a Real-time Transport Protocol packet carrying the media data to the terminal apparatus.

9. The method according to claim 8, wherein
a stream feature of the Real-time Transport Protocol packet carrying the Program Specific Information is the same as a stream feature of a Real-time Transport Protocol packet carrying the media data;
the serial number of the Real-time Transport Protocol packet carrying the Program Specific Information and the serial number of the Real-time Transport Protocol packet carrying the media data are continuous, and for sequencing of the serial numbers, the serial number of the Real-time Transport Protocol packet carrying the Program Specific Information is prior to the serial number of the Real-time Transport Protocol packet carrying the media data; and
the method, before the sending the Real-time Transport Protocol packet carrying the Program Specific Information to the terminal apparatus, further comprises:
informing the terminal apparatus that a start serial number of the Real-time Transport Protocol packet is the serial number of the Real-time Transport Protocol packet carrying the Program Specific Information.

10. A channel change device, comprising:
a Transport Stream packet acquisition module, configured to acquire a Transport Stream packet comprising Program Specific Information from a received channel multicast media stream, and store the Transport Stream packet, wherein the Program Specific Information is used for decoding media data;
a second change processing module, configured to acquire, in a channel change process, the Transport Stream packet comprising the Program Specific Information from information stored by the Transport Stream packet acquisition module, and reassemble the Transport Stream packet into a Real-time Transport Protocol packet; and
a second sending module, configured to send the Real-time Transport Protocol packet carrying the Program Specific Information to a terminal apparatus, and subsequently, send a Real-time Transport Protocol packet carrying the media data to the terminal apparatus.

11. The device according to claim 10, wherein
the second change processing module comprises:
a second acquisition sub-module, configured to, after the device receives a channel change request sent from the terminal apparatus, acquire the Transport Stream packet comprising the Program Specific Information from stored information;
a second serial number allocation sub-module, configured to allocate a serial number to the Real-time Transport Protocol packet carrying the Program Specific Information, wherein the serial number and a serial number of the Real-time Transport Protocol packet carrying the media data are continuous, and for sequencing of the serial numbers, the serial number of the Real-time Transport Protocol packet carrying the Program Specific Information is prior to the serial number of the Real-time Transport Protocol packet carrying the media data; and
a second reassembly sub-module, configured to reassemble the Transport Stream packet acquired by the second acquisition sub-module into a Real-time Transport Protocol packet, wherein the serial number of the reassembled Real-time Transport Protocol packet is the serial number allocated by the serial number allocation sub-module, and the stream feature of the reassembled Real-time Transport Protocol packet is the same as a stream feature of the Real-time Transport Protocol packet carrying the media data; and
the second sending module is further configured to inform the terminal apparatus that the start serial number of the Real-time Transport Protocol packet is the serial number of the Real-time Transport Protocol packet carrying the Program Specific Information.

12. A channel change system, comprising:
a server, configured to acquire a Transport Stream packet comprising Program Specific Information from a received channel multicast media stream, store the Transport Stream packet, wherein the Program Specific Information is used for decoding media data, acquire, in a channel change process, the Transport Stream packet comprising the Program Specific Information from the stored information, and reassemble the Transport Stream packet into a Real-time Transport Protocol packet; and
a terminal apparatus, configured to acquire the Program Specific Information from the received Real-time Transport Protocol packet, and decode the media data carried in a received Real-time Transport Protocol packet by using the Program Specific Information.
